# EUROPEAN PATENT SPECIFICATION

(11) **EP 3 177 197 B1**
(45) Date of publication and mention of the grant of the patent: **23.06.2021**
(21) Application number: 15751217.9
(22) Date of filing: 05.08.2015
(51) Int. Cl.: A47L 23/26

(54) **TWO PART FLOOR COVERING**
ZWEITEILIGE BODENABDECKUNG
REVÊTEMENT DE SOL CONSTITUÉ DE DEUX PARTIES

(30) Priority: 05.08.2014 US 201462033233 P
(43) Date of publication of application: 14.06.2017
(73) Proprietor: Milliken & Company, Spartanburg, South Carolina 29303 (US)
(72) Inventor: DAWSON, Ty G., Spartanburg, SC 29302 (US); LOVE, III Franklin S., Columbus, NC 28722 (US); ROBERTS, Brandon T., Greer, SC 29651 (US); DESOIZA, Christopher A., Greer, SC 29651 (US); PUTHILLATH, Padmakumar, Greer, SC 29650 (US); RAGHAVENDRAN, Venkatkrishna, Greer, SC 29650 (US); KITCHEN, Dale S., Boiling Springs, SC 29316 (US)
(74) Representative: Hoffmann Eitle
(86) International application number: PCT/US2015/043750
(87) International publication number: WO 2016/022643

(56) References cited:
- US-A- 3 696 459
- US-A- 4 361 925
- US-A- 4 769 895

## Description

### Cross-Reference to Related Applications

This application claims priority to U.S. Patent Application Serial Number 62/033,233, entitled "Two Part Floor Covering," which was filed on August 5, 2014.

### Technical Field of the Invention

The present invention is directed to a floor covering having a relatively rigid base and a mat overlaying the base and detachable therefrom. The two part floor covering may be positioned in an area of high pedestrian traffic, such as the entranceway of a building, to collect dirt and moisture from a person's shoes. The mat can be lifted from the base and laundered separately. Alignment and deployment of the textile component with the base component in an efficient manner is also described herein.

### Background of the Invention

Conventional floor mats are constructed by tufting a textile yarn into a substrate and bonding a rubber backing to the substrate, opposite the face yarns. The rubber backing is relatively heavy to stabilize the mat and to protect the floor. Such mats, however, have certain drawbacks.

The energy required to transport, wash and dry a typical floor mat is significant due to the overall mass of the mat. This mass is made up of the mass of the textile yarns, the mass of the substrate into which the yarns are tufted, and most significantly, the mass of the rubber backing sheet, which is bonded to the substrate under heat and pressure. As will be appreciated, a reduction in the overall mass of the floor mat will result in a reduced energy requirement in washing and drying the mat. Moreover, a relative reduction in the mass of the rubber backing sheet, i.e. the heaviest component, will provide the most significant benefit.

Mats are typically constructed with the rubber backing extending beyond the edges of the tufted substrate, to form an outer border. The outer border assists in maintaining the mat in a flat orientation and provides a transition from the floor to the upper surface of the mat. Under some circumstances, however, the rubber border can wrinkle and buckle. For example, the edges of the mat can become damaged by temperature extremes, abuse and mishandling. Irregularities in the outer border of the mats can create a tripping hazard and interfere with the operation of nearby doors.

Conventional mats are difficult to vacuum, because the suction power of a vacuum cleaner can cause the mat to lift from the floor, thereby creating raised sections or preventing movement of the vacuum cleaner relative to the mat. Additionally, the mat may be drawn into the vacuum cleaner by the strong suction, especially along the edges of the mat, and damaged.

One prior art solution is to provide a separate base component and textile mat component, whereby the base is relatively rigid and the textile mat is lighter in weight, for easier laundering. Examples of the two component systems may be found in the following references.

US Patent No. 5,524,317 discloses a magnetic powder incorporated into the elastomeric backing of a lightweight mat. The mat is placed over a magnetic base and held in place during use.

US Patent No. 6,093,469 discloses a mat having a backing with longitudinal treads, which prevent creep and folding of the mat on the floor. A separate border is provided to stabilize the mat. The edge of the mat is inserted into a pocket recess in the border and glued into place.

US Patent No. 7,416,771 B2 discloses a mat frame and a replaceable mat insert. The frame has a recess for receiving the edge of the mat insert. The mat insert may be a nonwoven or a reticulated foam. Studs or nibs extending from the frame engage the underside of the mat insert.

WO 00/15582 discloses a separate base and a dust-absorbing sheet overlaying the base. The sheet may be a replaceable nonwoven material. The base is provided with a treatment to prevent the sheet from moving, such as a collection of small cylindrical protuberances. Additionally, the base may be treated to coarsen the surface, to further stabilize the sheet. The base is also provided with a peripheral pocket for receiving and securing the edges of the dust-absorbing sheet.

US Patent Application Publication 2003/0180499 A1 discloses a multiple-component mat, wherein the mat and the base are held together by magnetic attraction.

US Patent Application Publication 2006/0107480 A1 discloses a door mat having a rubber backed textile mat, which overlays a tray-shaped base having a plurality of inserts with stud-shaped projections. The base has a peripheral retention lip which receives the border of the mat.

US Patent Application Publication 2011/0229692 A1 discloses a modular base system for a floor mat, with various ways to join the sections of the base together. The mat may be secured to the base by hooks that directly engage the mat, hook and loop fasteners or adhesive tape.

Further prior art can be found in US 4,361,925.

A drawback with many of the multi-component mat systems arises when a replacement mat is repositioned relative to the base. The components used to secure the mat to the base, such as magnets, hook and loop fasteners and adhesive tape, tend to immediately engage when the mat is laid on the base. It then becomes difficult to adjust the mat relative to the base or to remove wrinkles from the mat. Accordingly, one is required to repeatedly disengage the mat from the base, to make small adjustments to the position of the mat.

Therefore, because the attachment mechanisms can utilize a high amount of force to hold the top and bottom components of the floor mat together, the initial alignment and deployment of the top textile component onto the base component can present challenges. This problem is exaggerated by the large surface area of the two components that are in contact with one another. In this regard, even if the adherence force per unit area is low, the large surface area means that the total resistance to sliding and movement can be very high making realignment of the components very difficult. If not corrected, mis-alignment of the textile component with the base component may create trip hazards within the floor mat and may be aesthetically not pleasing.

The present invention overcomes these challenges via the use of alignment and deployment techniques that rely upon temporary reduction in surface area of the textile and/or base component and/or temporary reduction in adherence force between the textile and base components.

### Summary of the Invention

A two part floor covering is provided having a base with a planar tray and mat overlaying the tray. Optionally, the base also includes a border surrounding the tray. The border may slope upward from its outer perimeter to its inner perimeter adjacent the tray, thereby creating a recess for the tray section of the base. The mat may be a sheet-like substrate with an upper face and a lower face, having pile yarns extending from the upper face of the substrate and a backing layer attached to the lower face of the substrate.

In one embodiment of the invention, the floor covering is provided with a fastening system for detachably securing the mat to the base tray. The fastening system has at least one mushroom-type hook fastener component attached to one or the other of the backing layer of the mat or the tray. A second component of the fastening system, which may be a mushroom-type hook fastener, loop strip or a fabric capable of being penetrated by the hooks of the first component, is attached on the backing layer of the mat or tray, opposite the first component. For example, if the first component is attached to the backing layer, the second component is attached to the tray. It has been found that such a fastening system provides the advantage of allowing a mat to be laid on the tray and the mat can be positioned without engaging or interlocking the first and second components, that is, the mat can be moved laterally without requiring the mat to be lifted vertically to disengage the fastening system. When the mat is positioned in the desired location overlaying the base, the mat is pressed downward to engage the fastening system.

In another embodiment of the invention, which may be employed alone or in combination with the mushroom-type fastening system, the mat, the tray or both incorporate a structure to increase the coefficient of friction between the mat and the base selected from a textured surface, complimentary surfaces, surface projections or a layer of tacky material, or a combination of one or more of such structures.

In yet a further embodiment, the invention relates to a method for installation of a floor mat comprising the following steps: (a) providing a base component, wherein the base component contains at least one attachment means; (b) providing a textile component, wherein the textile component is comprised of tufted pile carpet and contains at least one attachment means that works in corresponding relationship with the at least one attachment means of step "a," and wherein the base component and the textile component are releasably attachable to one another via the at least one attachment means; (c) aligning the textile component with the base component, wherein the step of aligning is accomplished via the use of at least one alignment or deployment mechanism; and (d) deploying the textile component onto the base component.

### Brief Description of the Drawings

Figure 1 is a side cross-sectional view of the mat component of the invention.
Figure 2 is a top perspective view of the base component of the invention.
Figure 3 is a top perspective view of the subject two part floor covering with the mat partially pulled back to expose the mushroom-type fastening system.
Figure 4 is a side cross-sectional view of the mushroom-type fastening system.
Figure 5 is a top perspective view of the subject two part floor covering with the mat partially pulled back to expose the projections extending from both the mat and the base.
Figure 6 is an enlarged view of the projections extending from the tray section of the base component.
Figure 7 is an expanded side view of a rolled up textile component ready for deployment to a base component comprising a multi-component floor mat.
Figure 8 is a top perspective of one embodiment of an alignment and deployment mechanism in use with a multi-component floor mat.
Fig. 9A is a partial top perspective of another of an alignment and deployment mechanism in use with a multi-component floor mat.
Fig. 9B is an expanded planar view of the floor mat of Figure 3A with a portion of the textile component pulled back from the base component to expose the alignment and deployment mechanism.
Fig. 10A is an expanded planar view of a properly aligned multi-component floor mat with corner attachment means.
Fig. 10B is an expanded view of the floor mat of Figure 4A with the textile component pulled back to expose the corner attachment means.
Fig. 10C is a top perspective view of another embodiment of a properly aligned multi-component floor mat with corner attachment means.
Fig. 10D is an expanded side view of the corner attachment means of Fig. 4C.
Fig. 11A is a top perspective view of a properly aligned multi-component floor mat without corner attachment means.
Fig. 11B is partial view of a multi-component floor mat with the textile component partially pulled back showing the alignment and deployment mechanism and a variation of corner attachment means.

### Detailed Description of the Invention

Without intending to limit the scope of the invention, the preferred embodiments and features are hereinafter set forth.

The two part floor covering has a textile mat component and a base component, which are combined by laying the mat over the base, in particular over the tray section of the base. When the base is provided with a border, the mat is seated within the border.

The present invention also provides the use of alignment and deployment techniques that rely upon temporary reduction in surface area of the textile and/or base component and/or temporary reduction in adherence force between the textile and base components in order to allow efficient installation of the textile component to the base component.

### Textile Mat Component

The textile mat has pile yarns extending from a substrate. The yarns may be tufted into the substrate, as is well known in the art, and optionally secured with an adhesive or precoat, e.g. a hot melt material, applied to the underside of the substrate. The substrate may be a woven or nonwoven sheet, such as a slit-film woven polypropylene substrate or a melt-blown substrate made of a polyolefin, polyester or polyamide fiber, in particular a coextruded polyester / nylon fiber, having a weight of 67.81 to 169.53 g/m² (2 to 5 oz per yd²).

The yarn may be selected from natural and synthetic fibers and combinations thereof. By way of example, the yarn may be cotton, a polyamide, such as nylon, a polyester, such as PET, or a polyolefin, such as polypropylene.

The mat has a backing layer attached to the underside of the substrate. The backing layer may be a rubber or rubber-like sheet bonded to the substrate, for example, by vulcanization. The backing layer may also react with or be affixed by an adhesive or hot melt material. Examples of suitable compositions for the elastomeric sheet include neoprene rubber, acrylonitrile-butadiene rubber, styrene butadiene rubber, polyolefin elastomers, such as ethylene-propylene-diene, propylene elastomers and ethylene elastomers, and other thermoplastic elastomers, such as olefin containing elastomer, thermoplastic vulcanizate (TPV), poly ethylene-vinyl acetate (EVA), thermoplastic polyurethane, polyester copolymer elastomer, polyamide elastomer, flex PVC, chlorinated polyethylene. Alternatively, the backing layer may be formed by applying a molten or liquid composition to the substrate and curing the composition in situ. The backing layer may include various additives, as is known in the art. For example, thermoplastic resins designed to impart flexibility, strength, stiffness, etc. may be incorporated into the backing composition. In yet another embodiment, the backing layer may be a textile sheet, such as a nonwoven material, bonded to the substrate, which provides dimensional stability to the mat.

The weight of the yarn and substrate component of the mat may range from 508.59 to 1695.29 g/m² (15 to 50 oz / yd²), in particular from 508.59 to 1186.70 g/m² (15 to 35 oz / yd²). The backing component of the mat, which may be a latex back coating or a separate sheet laminated to the substrate / yarn components. The backing component may range in weight from 339.06 to 2034.34 g/m² (10 to 60 oz / yd²), in particular from 339.06 to 1017.17 g/m² (10 to 30 oz / yd²). Heavy duty prior art mats typically weigh about 4407.74 g/m² (130 oz / yd²). Thus, it can be understood that the present invention represents a significant weight reduction, with regard to the overall mat weight.

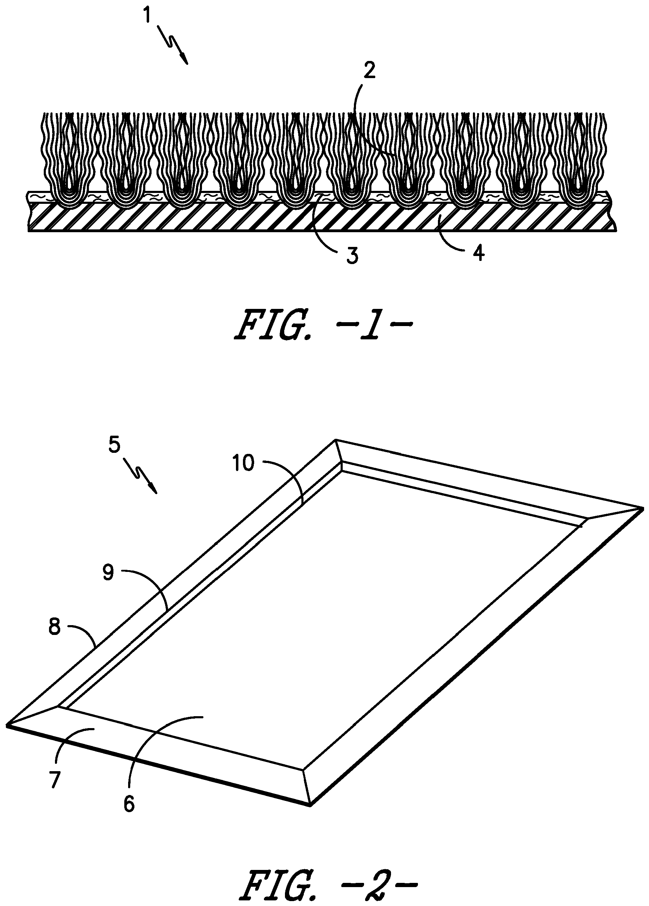

Referring to Figure 1, mat 1 has cut pile yarns 2 tufted into substrate 3. Backing layer 4 is bonded to the underside of substrate 3.

### Base Component

The base has a planar-shaped tray, which is sized to accommodate the mat. The base may also include a border surrounding the tray, whereby the border provides greater dimensional stability to the tray, for example, because the border is thicker, i.e. greater in height relative to the floor. Additionally, the border may be angled upward from its outer perimeter towards the interior of the base, so as to provide a recessed area where the tray is located, thereby creating a substantially level area between the inner perimeter of the border and the mat, when the mat overlays the tray. Additionally, the gradual incline from the outer perimeter of the border to the inner perimeter of the border minimizes tripping hazards and the recess created thereby protects the edges of the mat.

It can be understood that the base may be subdivided into two or more recessed trays, by extending a divider from one side of the border to an opposite side of the border, substantially at the height of the inner perimeter. Accordingly, it would be possible to overlay two or more mats in the recesses created in the base.

The base, including the border, may be formed in a single molding process as a unitary article. Alternatively, the border and the tray may be molded separately and then bonded together in a second operation. The tray and border may be made of the same or different materials. Examples of suitable compositions for forming the border and the tray are elastomers, such as natural and synthetic rubbers, thermoplastic and thermoset resins and metal.

Referring to Figure 2, base 5 has tray 6 surrounded by border 7. Border 7 slopes gradually upward from outer perimeter 8 to inner perimeter 9, to create recess 10 within base 5, corresponding to the area of tray 6.

### Two Part Floor Covering

The mat is placed on the base, overlaying the tray, to create the floor covering of the present invention. The mat can be readily removed for laundering or disposal and replaced with another mat, as desired. Various features are provided to improve the operation of the floor covering, especially with regard to inhibiting relative movement between the mat and the base when the floor covering is deployed on a floor, both with regard to horizontal movement (lateral shifting) and vertical movement (lifting). An advantage of the present invention is that the features employed to inhibit relative movement between the mat and base when the floor covering is in use do not interfere with mat replacement, which requires that the mat be readily shifted laterally and, as necessary, lifted, to position the mat relative to the base and remove wrinkles in the mat prior to deployment.

### Mushroom-type Hook Fastener System

The mat may be temporarily affixed to the base by a mushroom-type fastener system. The system includes a mushroom-type hook strip characterized by a backing, an array of upstanding stems distributed across the face of the backing, with each of the stems having a mushroom head. The mushroom-type hook strips are typically provided as an integrally molded unit. A first mushroom-type hook strip can engage a second mushroom-type hook strip that is configured to interlock with the first strip to create a fastener system, with the first and second strips attached to the mat and base, respectively.

Alternatively, the mushroom-type hook fastener may engage a loop strip or the mushroom-type hook fastener can be directly fastened to a fabric that can be penetrated by the hooks. It can be understood that the mushroom-type hook fastener may be attached to the base and the loop fabric or the fabric cable of being penetrated by the mushroom-type hooks may be attached to the backing layer of the mat, or vice versa. In one embodiment of the invention, the mushroom-type hook fastener is attached to the base and the backing layer of the mat is a fabric capable of being penetrated by the hooks, such as a scrim or non-woven fabric.

It is not necessary for the entire surface of the mat and tray to be covered with the mushroom-type hook fastener system. Rather, for economy of manufacture and to balance the requirements of stabilizing the mat without making it overly difficult to separate the mat from the base for servicing, the mushroom-type hook fastener system may be spaced apart in discrete areas, for example spaced around the edges of the mat.

Examples of suitable mushroom-type hook fastener systems may be found in the following references: US Patent No. 4,454,183; US Patent No. 5,077,870; US Patent No. 5,607,635; US Patent No. 5,845,735; US Patent No. 7,188,396 B2; and US Published Patent Application No. 2014/0137377 A1. Commercial products include Microplast® and Duotec® fasteners, available from Gottlieb Binder GmbH & Co. KG, Dual Lock™ fasteners from 3M.

In the foregoing embodiment of the invention, the method of replacing a mat is a two-step process. The mat is first positioned to overlay the tray, within the border of the base. The relatively lightweight mat does not immediately engage the mushroom-type fastener system, which allows the mat to be moved laterally relative to the base by lateral movement, without the need to disengage the fasteners. Once the mat is properly positioned, an operator need only press down on the mushroom-type fastener system, for example, along the perimeter of the mat, to engage the fastener and inhibit relative movement between the mat and base. When the mat is to be replaced, an operator can simply peal back the mat, by lifting an edge.

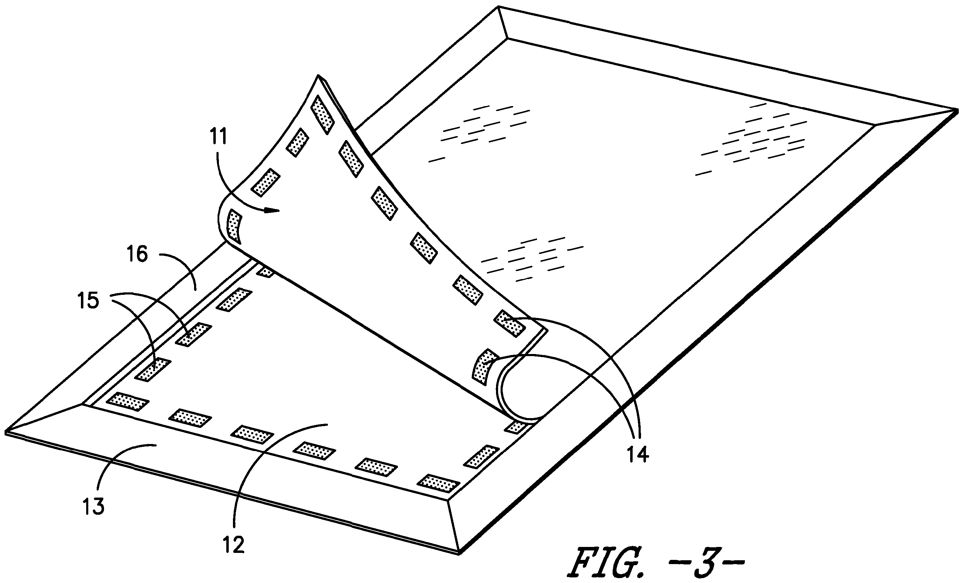

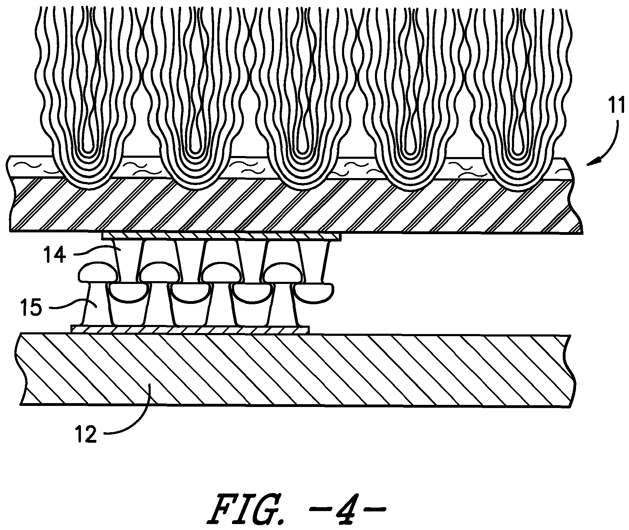

Referring Figures 3 and 4, mat 11 overlays tray 12 of base 13. A corner of mat 11 is turned back to reveal mushroom-type fasteners 14 attached in discrete strips along the underside edge of mat 11 and mushroom-type fasteners 15 attached in discrete strips along tray 12, within border 16 of base 13. Mushroom-type fasteners 14 and 15 are arranged opposite each other and interlock to inhibit lateral and lifting movement of mat 11 relative to base 13. The mushroom-type fasteners may be attached to the mat and base by various methods known in the art, for example with an adhesive or by mechanical attachment, such as a rivet or high tenacity thread.

### High Coefficient of Friction System

The relative lateral movement between the mat and the base may be inhibited by incorporating one or more of the following techniques to provide a high coefficient of friction between the backing layer and the tray. The techniques to increase the coefficient of friction between the mat and the base may be used alone or in conjunction with the mushroom-type fastening system described herein. Furthermore, where it is feasible, two or more of the techniques to increase the coefficient of friction between the mat and the base may be employed.

### 1. Textured Surface(s).

The surface of the backing layer, i.e. the underside, or the upper surface of the tray, or both can be textured. Broadly, the term texturing is intended to include any physical modification of the surface texture of a component to increase the coefficient of friction between the two surfaces. Of particular interest is texturing a surface to increase its roughness. In one embodiment, the backing layer or tray may be textured by calendaring against an embossed roll. Alternatively, the textured surface may be created by a clam press having an embossed surface.

In one embodiment, the surface of the backing layer, tray or both may be textured to create a granular surface. By way of example, a granular surface having a surface roughness of from 10 to 50 microns, as measured between the low and high points along the textured area, may be created to increase the coefficient of friction.

### 2. Complimentary Surfaces.

Of particular utility is to provide the surfaces of both the backing layer and the tray with complimentary surface structures, such that raised areas and valleys of the respective surfaces fit together. In one embodiment of the invention, the contact surface area between the mat and the tray is greater than the area covered by the mat itself, for example, because the mat and tray mesh together. The scale of the complimentary surfaces may be adjusted so that the force required to adjust the mat laterally relative to the tray is minimal, when a replacement mat is installed. In that regard, it is believed that the differences in height between raised areas and valley ranging from 10 to 50 microns are particularly useful in the present invention.

### 3. Surface Projections.

The coefficient of friction between the backing layer and the tray may be increased by providing one or both of the surfaces with projections. The projections may be rounded, such as nubs, or pointed, such as spikes. By way of example, the surface projections may extend from the surface of the backing layer or tray a distance of from 10 to 50 microns.

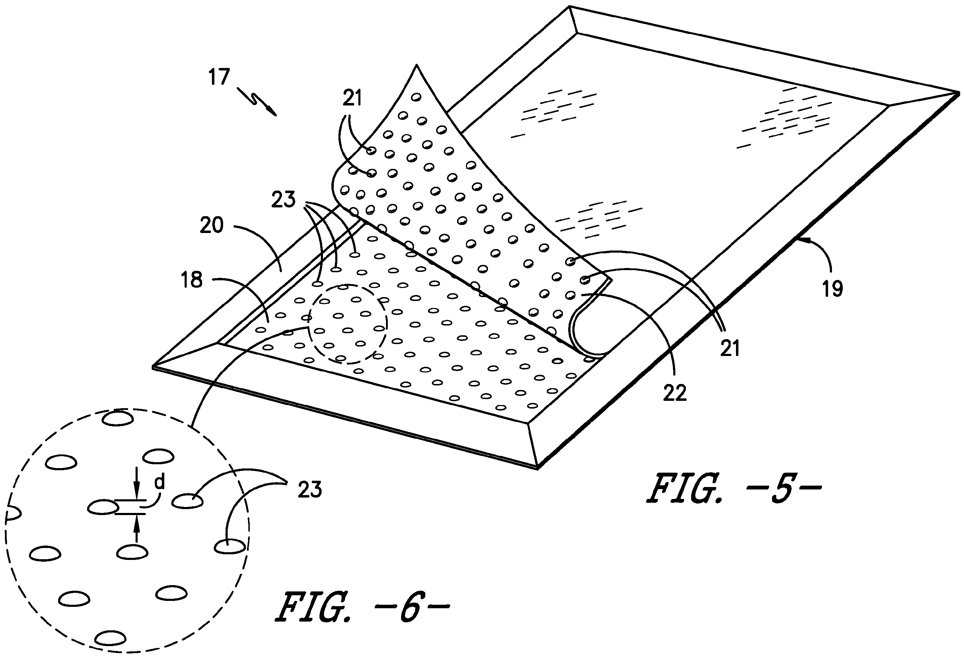

Referring to Figures 5 and 6, mat 17 is shown on base 18, overlaying tray 19 within border 20. A corner of mat 17 is lifted to show nubs 21 projecting from backing layer 22. Tray 20 is provided with nubs 23 projecting from its upper surface. Referring to Figure 6, nub 23 projects a distance "d" from the surface of tray 20. 4. Increase Surface Tack.

The coefficient of friction between the backing layer and the tray may be increased by providing one or both of the surfaces with a layer of tacky material. For example, the tacky material may be a hot-melt thermoplastic material, such as a polyolefin based elastomer, in particular, a propylene, ethylene or ethylene-vinyl acetate based elastomer. The tacky material may be a pressure sensitive adhesive, such as a double-side film.

### Alignment and Deployment Mechanisms

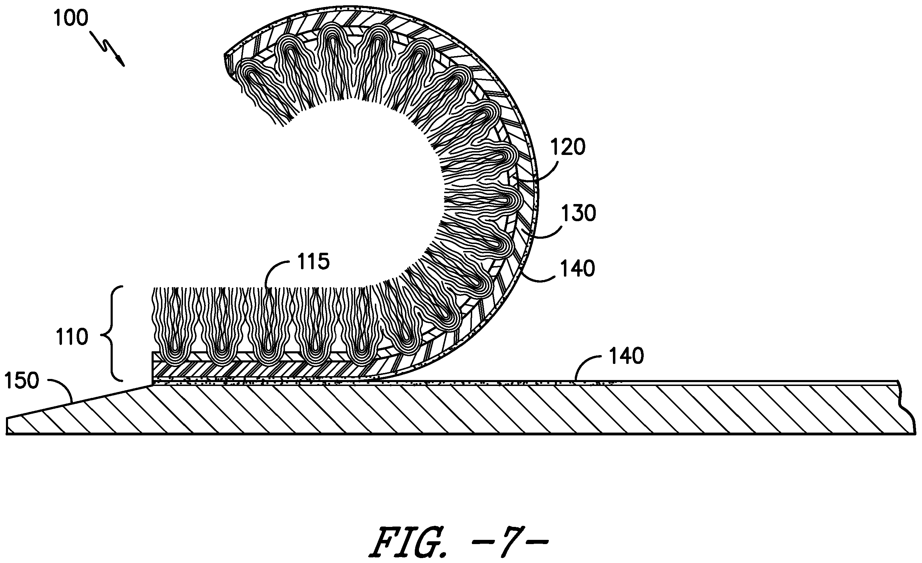

Figure 7 illustrates an alignment and deployment technique for floor mat 100 whereby textile component 110 is rolled up into a roll and then placed down on the base component 150. This alignment and deployment technique relies upon the property of surface area reduction between textile component 110 and base component 150. This may be achieved by rolling up the textile component prior to placing it (or deploying it) on the base component. When the textile component is rolled up into a fairly tight roll (with the face yarns rolled inward of the roll) and then the rolled up textile component is aligned on the base component, the total attractive force is so reduced that a service person or installer can slide the roll enough to allow good alignment with the base component using only the exposed end of the roll as a guide to align to the base component. This installation method relies upon reduction in surface area between the textile component and the base component.

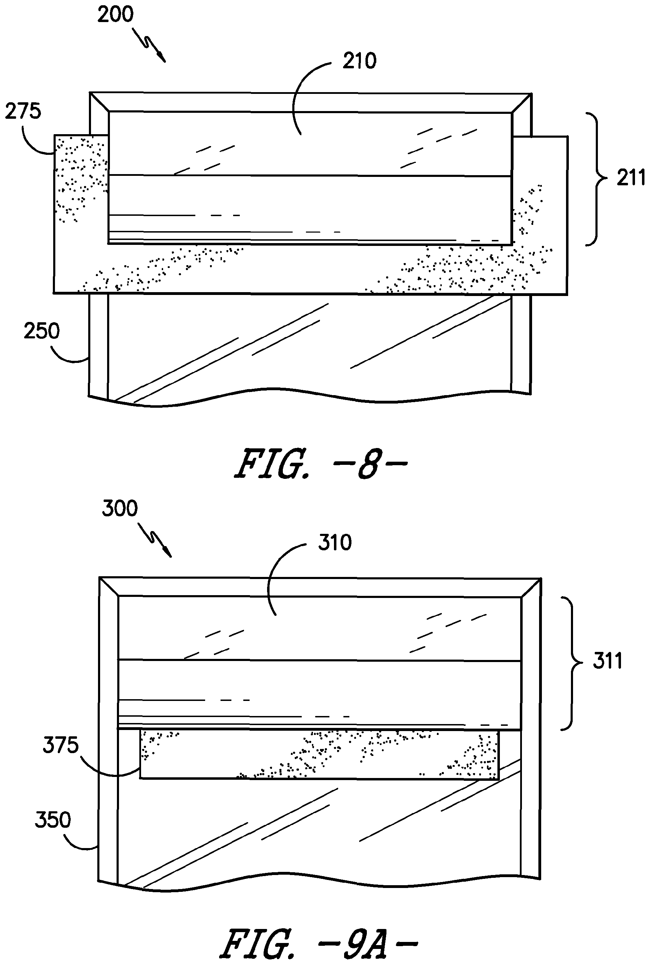

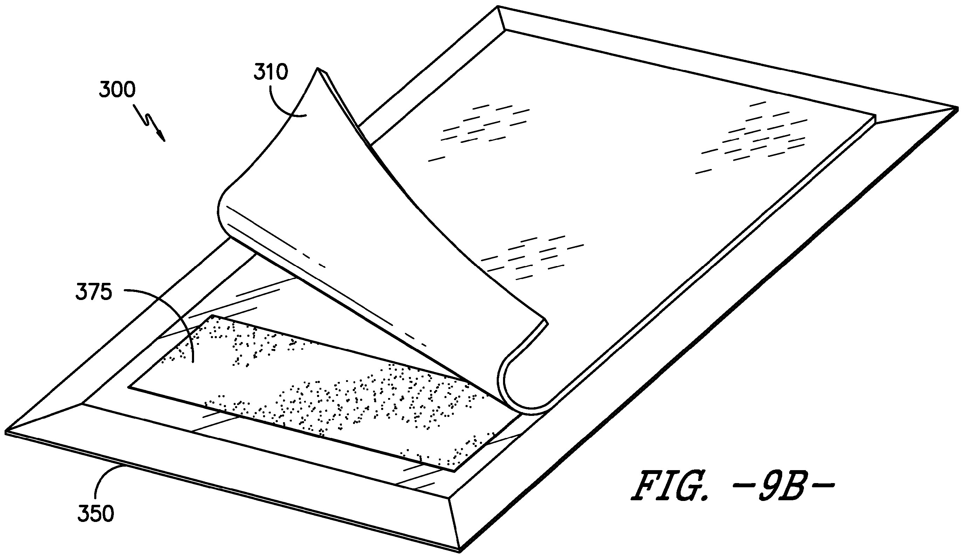

Additional alignment and deployment techniques based upon masking or blocking properties are shown in Figures 8, 9A and 9B. Figure 8 illustrates a portion of a floor mat with alignment/deployment means. Floor mat 200 is comprised of a textile component 210 rolled back upon itself. Between textile component 210 and base component 250 lies a sheet of material 275 used to aid in aligning and deploying textile component 210 onto base component 250. The sheet of material 275 is located under an upper portion 211 of textile component 210. The sheet of material 275 is wider than floor mat 200 and is shown overlapping the edges thereof.

Figure 9A illustrates a portion of a floor mat with alignment/deployment means. Floor mat 300 is comprised of a textile component 310 rolled back upon itself. Between textile component 310 and base component 350 lies a sheet of material 375 used to aid in aligning and deploying textile component 310 onto base component 350. The sheet of material 375 is located under an upper portion 311 of textile component 310. In this embodiment, the sheet of material 375 is more narrow that the floor mat and therefore does not overlap the edges of floor mat 300. Note that in Figures 8, 9A and 9B, base component 250, 350 is flat (planar) and does not contain a recessed area (or tray); the base component 250, 350 is trayless.

Figure 9B is the same Figure 9A, except that entire floor mat is shown and textile component 310 is pulled back to expose sheet material 375.

The sheet of material 275, 375 is comprised of any film or sheeting material that provides masking or blocking properties to the attachment mechanisms incorporated into or onto the textile and/or base component. For example, the sheet of material may be comprised of cellulose-containing materials, such as paper; polymer films; and combinations thereof. Thus, this installation method utilizes a removable temporary "mask" that reduces the attractive force between the components comprising the floor mat. This is accomplished by using sheeting, film or paper material that is placed between the base component and the rolled up textile component, but only in the area where the rolled up textile component and the base component contact one another. Now that the total area is greatly reduced by the roll and the force per unit area is reduced by the mask, the ease of moving the roll around to achieve alignment is now even greater. Once alignment is achieved, the masking material is removed by pulling or sliding it out from between the components.

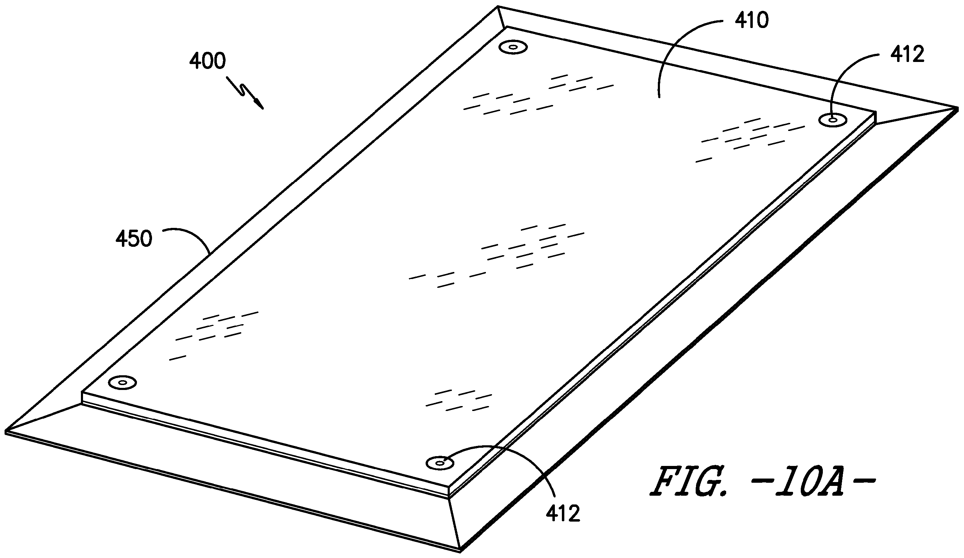

Figure 10A illustrates a floor mat 400 comprised of textile component 410 aligned and deployed with base component 450. Corner attachment means 412 are provided as an attachment means for attaching textile component 410 to base component 450.

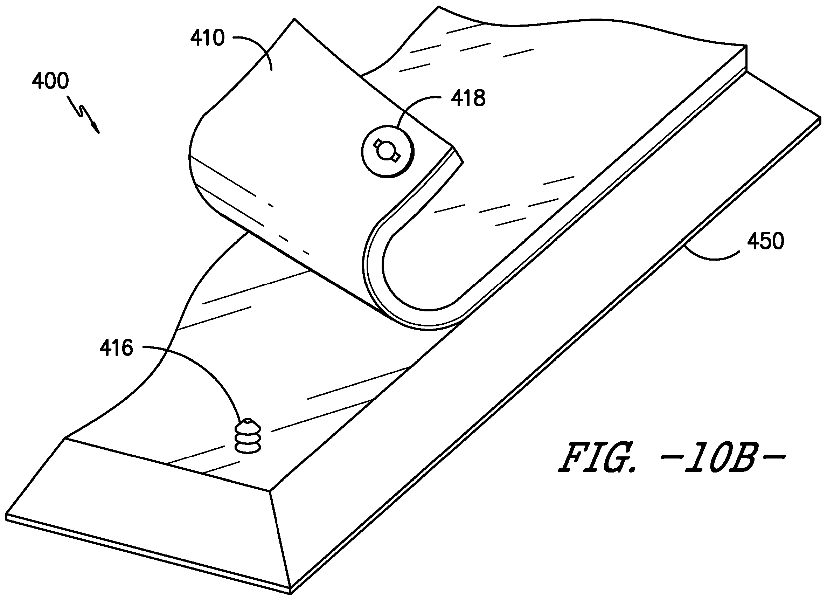

The corner attachment means 412 of Figure 10A are shown in Figure 10B in an expanded view. Textile component 410 is pulled back to expose the corner attachment means (e.g. corner grommets). Corner attachment means 412 are comprised of a male portion 416 and a female portion 418. The male portion 416 is intended to fit securely into female portion 418. Figure 10B illustrates male portion 416 contained within base component 450 and female portion 418 contained within textile portion 410. However, it is understood that the inverse arrangement could also be suitable whereby the location of the male and female portions are reversed.

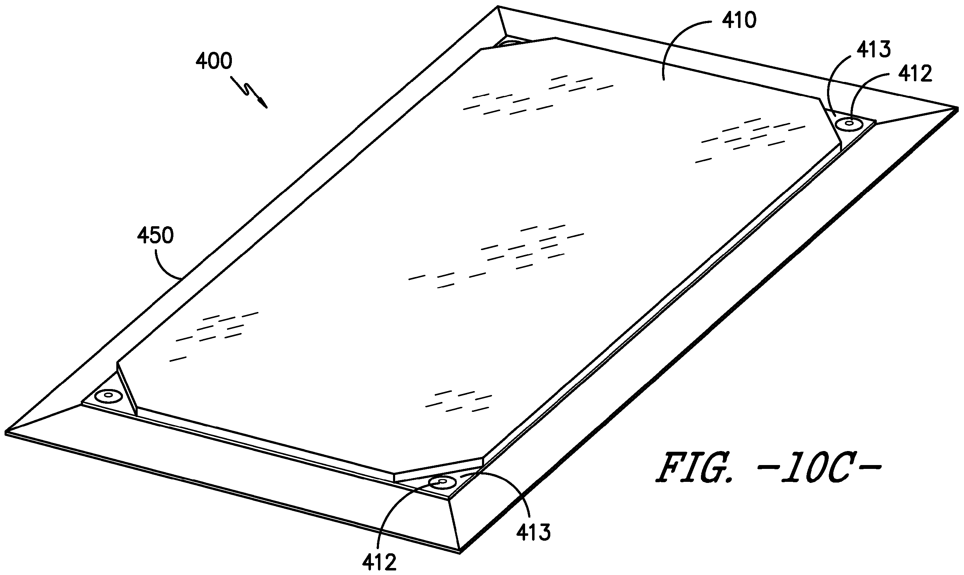

Figure 10C is the same as Figure 10A, except that corner areas 413 of textile component 410 are free from face yarns. Corner attachment means 412 are located in corner areas 413 that are free from face yarns. Corner attachment means 412 attach textile component 410 to base component 450.

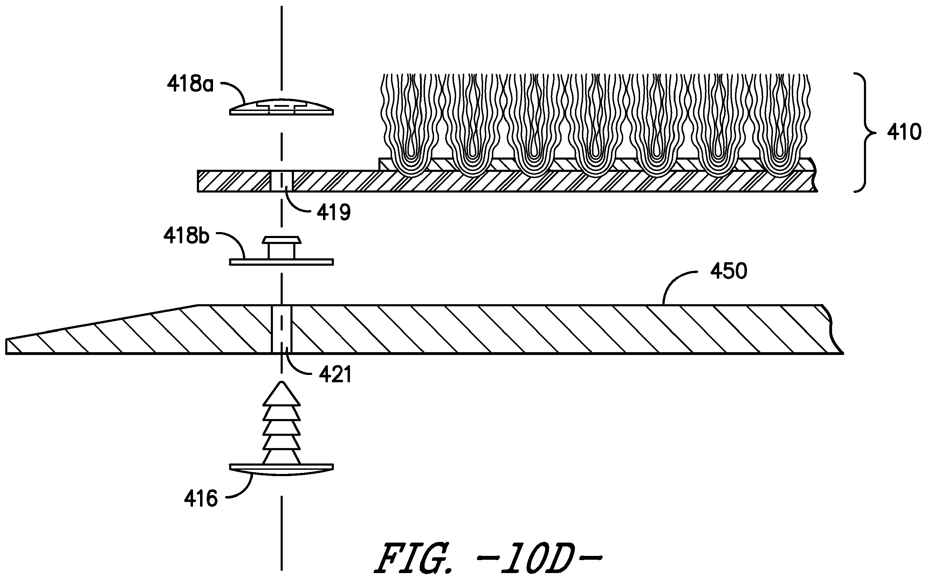

Details of corner attachment means 412 are illustrated in Figure 10D. As mentioned previously, corner attachment means 412 is comprised of male portion 416 and female portion 418. Female portion 418 is comprised of a cap portion 418a and a head portion 418b. Cap portion 418a is located on the surface of textile component 410 that contains face yarns. Head portion 418b is located on the surface opposite of cap portion 418a. Head portion 418b is inserted into cap portion 418a through an opening 419 in textile component 410 to form female portion 418. Male portion 416 is inserted upward through an opening 421 in base component 450. After female portion 418 is assembled of its cap portion 418a and head portion 418b, then male portion 416 may be inserted into female portion 418, thereby securing textile component 410 to base component 450.

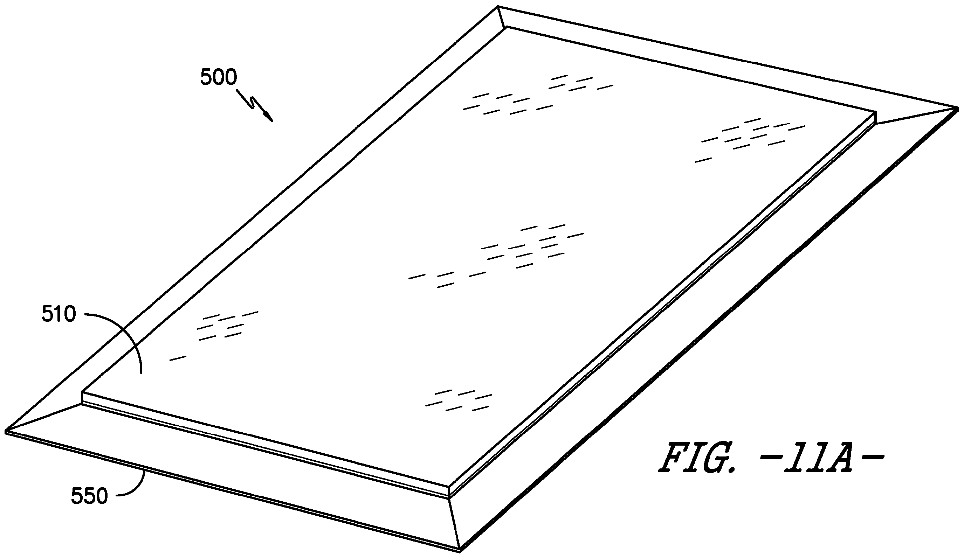

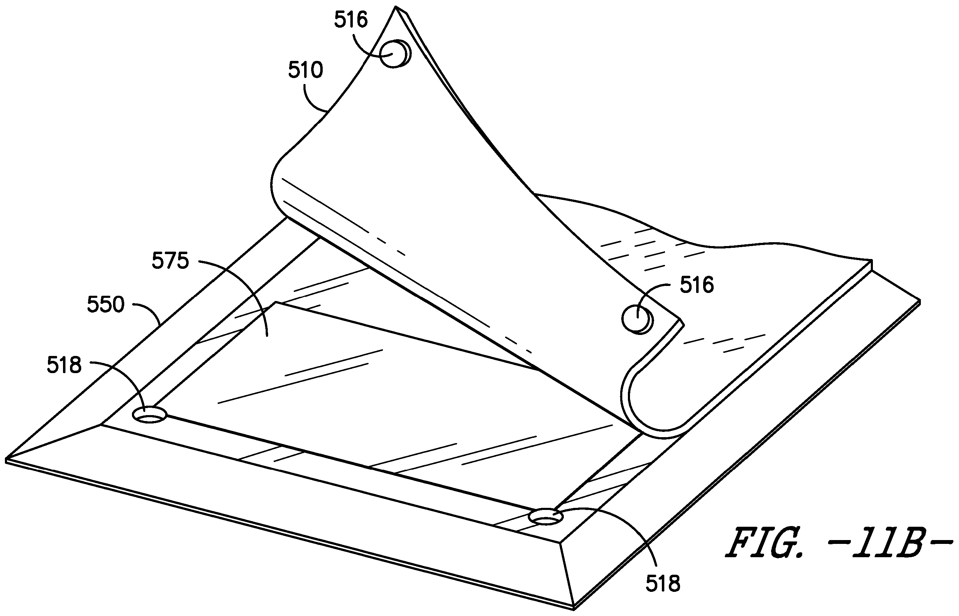

Figures 11A - 11C illustrate yet another embodiment of alignment and deployment techniques used in combination with corner attachment means. Figure 11A shows a properly aligned and deployed multi-component floor mat 500 comprised of textile component 510 and base component 550. Note that no external corner attachment means are visible from the top perspective view. Figure 11B is an expanded view of floor mat 500 of Figure 11A with a portion of textile component 510 pulled back to expose sheet material 575. Sheet material 575 is one embodiment of the alignment and deployment mechanism of the present invention and is comprised of material as previously discussed herein. Figure 11B further illustrates female corner attachment means 516 located in base component 550 and male corner attachment means 518 located in textile portion 510. Both attachment means are useful for aligning textile portion 510 with base component 550. Male corner attachment means 516 is adapted to fit snugly within the circumference of female corner attachment means 518. Female corner attachment means 518 is a hole in base component 550 having a depth that is in the range from 10% to 100% of the height of the base component. Male corner attachment means 516 are peg-like protrusions that fit snugly into the circumference of female corner attachment means 518.

In summary, the following alignment and deployment techniques may be used for installing the multi-component floor mat:
In the first case, it has been found that if the top half is rolled up in a fairly tight roll-face in-and then placed down on the base, that the total attraction force is so reduced that an installer can slide the roll enough to be able to get a good alignment with the base using the exposed end of the roll as a guide to align to the base. This method is mainly envisioned for small two part mats. Alignment marks can be put on the base to assist the top alignment.

The second method is to use the first method but coupled with a removable temporary "mask" that reduces the attractive force. This can be accomplished by using film or paper that is placed down on the base between the rolled up top and the base only in the area where the rolled up top will touch. Now that the total area is greatly reduced by the roll AND the force per unit area is reduced by the mask, then the ease of moving the roll around to achieve alignment is now even greater. Once alignment is achieved, the film or paper is slid out.

A third method, that is a refinement of the removable mask method, is to use a mask that is permanently installed and that selectively masks only the most critical area-i.e. the area directly below the roll, and leaves the area near the mat edge alone. One still manually aligns the roll and its edge to the base, but now the alignment is relatively easy and can be done quickly.

A fourth method can be used in concert with any of the above methods or alone. This method relies on an alignment pins or grommets that can capture two or more of the carpet corners. The pins are located in either the base or top and associated with the pins are complementary holes in the top or base. Once inserted, the pins capture the other half of the carpet requiring such that the two halves cannot be separated without substantial force. Once captured, the top mat can be picked up and gently laid down in alignment with the base. If a mat top should become disturbed or misaligned in the field, it is relatively easy to realign by simply picking the top up and laying it back down. If used in concert with 1-3 above, alignment now becomes not only easy, but quick and precise. Furthermore if care is taken to ensure that the masked area is always below the alignment pins and is sufficient size so that if the top is picked up that where it drapes is masked, then alignment/deployment is always easy.

A fifth method is a refinement of number 4 whereby the attachment pins are hidden and not visible from the face of the mat top. Methods to accomplish this are tightly fitting grommets or strong magnets molded into or glued to the back of the top mat, or grommets with strong magnets-all associated with complimentary holes with or without magnets in the base. This method can also be used in association with any of the 1-3 methods.

While the Figures illustrate exemplary embodiments of the alignment and deployment methods for installing the multi-component floor mat of the present invention, certain other aspects and features are contemplated to be obvious variations of the invention described herein. For instance, two or four corner attachment means may be present in the floor mat as used for attaching the textile component to the base component. Further, any combination of alignment and deployment techniques may be used either singularly or combined with others. For example, the method of reducing the surface area of the textile component by rolling it up may be used in combination with the masking technique wherein a sheet of material is placed between the textile and base components to reduce the forces of attraction between the components.

There are, of course, many alternative embodiment and modifications of the invention intended to be included within the following claims. For example, instead of a mat having a pile yarn upper surface and a backing layer, the mat may be a nonwoven textile surface, a solid rubber material or a substrate having surface bristles, for example, bristles used to scrub dirt and mud from a person's shoes. In another embodiment of the invention, the base may be provided with a pocket or recess formed at the junction of the border and the tray. For example, the border may overhang the tray a short distanced to create a recess and the peripheral edge of the mat may be inserted in the recess.

Also within the scope of the invention is to provide a base with a border that can be clamped down on part or all of the peripheral edge of the mat. The clamping mechanism may include a clam-shell hinge between the border and the tray. Or, the border function as a snap-ring to engage the periphery of the tray. An O-ring may be inserted between the border and the tray components of the base, over the peripheral edge of the mat to create a seal and to grip the mat.

## Claims

1. A two part floor covering, comprising:
(a) a base (5, 13, 18) having a planar tray (6, 12, 19), the tray (6, 12, 19) having an upper surface;
(b) a mat (1, 11, 17) overlaying the tray (6, 12, 19), the mat (1, 11, 17) having (i) a sheet-like substrate (3) with an upper face and a lower face; and (ii) a backing layer (4, 22) attached to the lower face of the substrate (3); and
(c) a fastening system for detachably securing the mat (1, 11, 17) to the base tray (6, 12, 19), the fastening system having a mushroom-type hook fastener (14, 15)first component and a second component that is capable of engaging the first component to create a fastener (14, 15), wherein the second component is selected from the group consisting of mushroom-type hook fasteners (14, 15), loop strips and a fabric capable of being penetrated by the hooks of the first component, provided that first component is attached to either the backing layer (4, 22) of the mat (1, 11, 17) or the tray (6, 12, 19) and the second component is attached opposite the first component, to either the backing layer (4, 22) of the mat (1, 11, 17) or the tray (6, 12, 19),
wherein the floor covering includes at least one alignment and deployment mechanism selected from textile component configurations that reduce surface area, a film material, a sheeting material, and combinations thereof.

2. The floor covering of Claim 1, wherein the mat (1, 11, 17) further has; (iii) pile yarns (2) extending from the upper face of the substrate (3).

3. The floor covering of Claim 2, wherein the backing layer (4, 22) or the tray (6, 12, 19) or both incorporate a structure to increase the coefficient of friction between the mat (1, 11, 17) and the base (5, 13, 18) selected from the group consisting of a textured surface, complimentary surfaces, surface projections and a layer of tacky material.

4. The floor covering of Claim 2, wherein the second component of the fastening system is a mushroom-type fastener (14, 15), and the first and second components of the fastening system are capable of interlocking.

5. The floor covering of Claim 4, wherein the first component and the second component of the fastening system are spaced apart in discrete locations, opposite each other, around the perimeters of the mat (1, 11, 17) and the tray (6, 12, 19), respectively.

6. The floor covering of Claim 1, 2 or 4, wherein the weight of the mat (1, 11, 17) alone does not cause the first and second components of the fastening system to engage, when the mat (1, 11, 17) is laid on the tray (6, 12, 19) and optionally wherein the mat (1, 11, 17) has a weight of from 847.64 to 2203.87 g/m² (25 to 65 oz / yd²) and the backing layer (4, 22) further optionally comprises an elastomer.

7. The floor covering of Claim 1, wherein first component of the fastening system is attached to the tray (6, 12, 19), and the backing layer (4, 22) is a nonwoven textile, and wherein the backing layer (4, 22) is capable of being penetrated by the hooks of the first component of the fastening system.

8. The floor covering of Claim 3, wherein the backing layer (4, 22) of the mat (1, 11, 17), and/or the tray (6, 12, 19) has/have a granular surface texture.

9. The floor covering of Claim 3, wherein the backing layer (4, 22) of the mat (1, 11, 17) has a layer of hot-melt thermoplastic resin, preferably a polyolefin elastomer, applied to the side facing the base (5, 13, 17), to increase the coefficient of friction between the mat (1, 11, 17) and the base (5, 13, 17).

10. The floor covering of Claim 3, wherein at least one of the backing layer (4, 22) of the mat (1, 11, 17) or the tray (6, 12, 19) have a textured surface with an average roughness of 10 to 50 microns, as measured between the low and high points along the textured area.

11. A method for installation of a floor mat comprising the following steps:
(a) Providing a base component, wherein the base component contains at least one attachment means;
(b) Providing a textile component, wherein the textile component is comprised of tufted pile carpet and contains at least one attachment means that works in corresponding relationship with the at least one attachment means of step "a," and wherein the base component and the textile component are releasably attachable to one another via the at least one attachment means;
(c) Aligning the textile component with the base component, wherein the step of aligning is accomplished via the use of at least one alignment or deployment mechanism, wherein the at least one alignment and deployment mechanism is selected from the group consisting of textile component configurations that reduce surface area, the use of a film material, the use of a sheeting material, and combinations thereof; and
(d) Deploying the textile component onto the base component.

12. The method of claim 11, wherein the at least one attachment means is achieved via mechanical attachment of the textile component to the base component wherein mechanical attachment is optionally achieved via a fastening system that uses mushroom-type hook fasteners.

## Patentansprüche

1. Zweiteiliger Bodenbelag, der umfasst:
a) eine Basis (5, 13, 18), die eine planare Schale (6, 12, 19) aufweist, wobei die Schale (6, 12, 19) eine obere Oberfläche aufweist;
b) eine Matte (1, 11, 17), die die Schale (6, 12, 19) überlagert, wobei die Matte (1, 11, 17) (i) ein plattenähnliches Substrat (3) mit einer oberen Fläche und einer unteren Fläche aufweist; und (ii) eine Unterstützungsschicht (4, 22), die an der unteren Fläche des Substrates (3) angebracht ist; und
c) ein Befestigungssystem zum lösbaren Sichern der Matte (1, 11, 17) an der Basisschale (6, 12, 19), wobei das Befestigungssystem einen ersten Hakenbefestiger (14, 15) vom Pilztyp aufweist, und ein zweites Bauteil, das fähig ist, in das erste Bauteil einzugreifen, um einen Befestiger (14, 15) zu schaffen, wobei das zweite Bauteil aus der Gruppe ausgewählt ist, die aus Hakenbefestigern (14, 15), Schleifenstreifen und einem Gewebe besteht, das fähig ist, von den Haken des ersten Bauteils durchdrungen zu werden, vorausgesetzt, dass das erste Bauteil entweder an der Unterstützungsschicht (4, 22) der Matte (1, 11, 17), oder an der Schale (6, 12, 19) angebracht ist, und das zweite Bauteil dem ersten Bauteil entgegengesetzt entweder an der Unterstützungsschicht (4, 22) der Matte (1, 11, 17), oder an der Schale (6, 12, 19) angebracht ist,
wobei der Bodenbelag mindestens einen Ausrichtungs- und Ausbreitungsmechanismus beinhaltet, der aus Textilbauteilkonfigurationen, die den Oberflächenbereich reduzieren, einem Plattenmaterial, einem Verkleidungsmaterial und Kombinationen davon ausgewählt ist.

2. Bodenbelag nach Anspruch 1, wobei die Matte (1, 11, 17) weiter aufweist; (iii) Florgarne (2), die sich von der oberen Fläche des Substrats (3) erstrecken.

3. Bodenbelag nach Anspruch 2, wobei die Unterstützungsschicht (4, 22) oder die Schale (6, 12, 19) oder beide eine Struktur enthalten, um den Reibungskoeffizienten zwischen der Matte (1, 11, 17) und der Basis (5, 13, 18) zu erhöhen, die aus der Gruppe ausgewählt ist, die aus einer texturierten Oberfläche, ergänzenden Oberflächen, Oberflächenvorsprüngen und einer Schicht aus klebrigem Material besteht.

4. Bodenbelag nach Anspruch 2, wobei das zweite Bauteil des Befestigungssystems ein Befestiger (14, 15) vom Pilztyp ist, und das erste und das zweite Bauteil des Befestigungssystems fähig sind, ineinander zu greifen.

5. Bodenbelag nach Anspruch 4, wobei das erste Bauteil und das zweite Bauteil des Befestigungssystems an getrennten Stellen einander entgegengesetzt um jeweils den Umfang der Matte (1, 11, 17) und der Schale (6, 12, 19) voneinander beabstandet sind.

6. Bodenbelag nach Anspruch 1, 2 oder 4, wobei das Gewicht der Matte (1, 11, 17) allein das erste und das zweite Bauteil des Befestigungssystems nicht veranlasst, ineinander einzugreifen, wenn die Matte (1, 11, 17) auf die Schale (6, 12, 19) gelegt wird, und wobei optional die Matte (1, 11, 17) ein Gewicht von 847,64 bis 2.203,87 g/m² (25 bis 65 oz / yd²) aufweist, und die Unterstützungsschicht (4, 22) weiter optional ein Elastomer umfasst.

7. Bodenbelag nach Anspruch 1, wobei das erste Bauteil des Befestigungssystems an der Schale (6, 12, 19) angebracht ist, und die Unterstützungsschicht (4, 22) ein Vliesstoff ist, und wobei die Unterstützungsschicht (4, 22) fähig ist, von den Haken des ersten Bauteils des Befestigungssystems durchdrungen zu werden.

8. Bodenbelag nach Anspruch 3, wobei die Unterstützungsschicht (4, 22) der Matte (1, 11, 17) und/oder der Schale (6, 12, 19) eine körnige Oberflächentextur aufweist/(-en).

9. Bodenbelag nach Anspruch 3, wobei die Unterstützungsschicht (4, 22) der Matte (1, 11, 17) eine Schicht aus Heißschmelz-Thermoplast, vorzugsweise aus einem Polyolefin-Elastomer aufweist, der auf die Seite, die der Basis (5, 13, 17) zugewandt ist, auftragen ist, um den Reibungskoeffizienten zwischen der Matte (1, 11, 17) und der Basis (5, 13, 17) zu erhöhen.

10. Bodenbelag nach Anspruch 3, wobei mindestens eine der Unterstützungsschicht (4, 22), der Matte (1, 11, 17) oder der Schale (6, 12, 19) eine texturierte Oberfläche mit einer mittleren Rauheit von 10 bis 50 Mikrometer, wie zwischen den niedrigen und hohen Stellen entlang der texturierten Fläche gemessen, aufweist.

11. Verfahren zum Installieren einer Bodenmatte, das die folgenden Schritte umfasst:
a) Bereitstellen eines Basisbauteils, wobei das Basisbauteil mindestens ein Anbringungsmittel enthält;
d) Bereitstellen eines Textilbauteils, wobei das Textilbauteil aus büscheligem Florteppich besteht und mindestens ein Anbringungsmittel enthält, das in entsprechender Beziehung mit dem mindestens einen Anbringungsmittel des Schrittes "a" arbeitet, und wobei das Basisbauteil und das Textilbauteil lösbar aneinander über das mindestens eine Anbringungsmittel anbringbar sind;
b) Ausrichten des Textilbauteils mit dem Basisbauteil, wobei der Schritt des Ausrichtens über die Verwendung mindestens eines Ausrichtungs- und Ausbreitungsmechanismus erreicht wird, wobei der mindestens eine Ausrichtungs- und Ausbreitungsmechanismus aus der Gruppe ausgewählt ist, die aus Textilbauteilkonfigurationen, die den Oberflächenbereich reduzieren, der Verwendung eines Folienmaterials, der Verwendung eines Verkleidungsmaterials und Kombinationen davon besteht; und
c) Ausbreiten des Textilbauteils auf das Basisbauteil.

12. Verfahren nach Anspruch 11, wobei das mindestens eine Anbringungsmittel über mechanisches Anbringen des Textilbauteils an dem Basisbauteil erhalten wird, wobei mechanische Anbringung optional über ein Befestigungssystem, das Hakenbefestiger vom Pilztyp verwendet, erhalten wird.

## Revendications

1. Revêtement de sol en deux parties, comprenant :
(a) une base (5, 13, 18) présentant un plateau planaire (6, 12, 19), le plateau (6, 12, 19) présentant une surface supérieure ;
(b) un tapis (1, 11, 17) recouvrant le plateau (6, 12, 19), le tapis (1, 11, 17) présentant (i) un substrat (3) analogue à une feuille avec une face supérieure et une face inférieure ; et (ii) une couche d'appui (4, 22) attachée à la face inférieure du substrat (3) ; et
(c) un système de fixation pour arrimer le tapis (1, 11, 17) au plateau de base (6, 12, 19), le système de fixation présentant un premier composant d'élément de fixation à crochets de type champignon (14, 15) et un second composant qui est capable de venir en prise avec le premier composant pour créer un élément de fixation (14, 15), dans lequel le second composant est sélectionné à partir du groupe constitué d'éléments de fixation à crochets de type champignon (14, 15), de bandes à boucles et d'un tissu capable d'être pénétré par les crochets du premier composant, à condition que le premier composant soit attaché à la couche d'appui (4, 22) du tapis (1, 11, 17) ou au plateau (6, 12, 19) et que le second composant soit attaché à l'opposé du premier composant, soit à la couche d'appui (4, 22) du tapis (1, 11, 17) soit au plateau (6, 12, 19),
dans lequel le revêtement de sol inclut au moins un mécanisme d'alignement et de déploiement sélectionné à partir de configurations de composants textiles qui réduisent la superficie, un matériau en film, un matériau en feuille, et des combinaisons de celles-ci.

2. Revêtement de sol selon la revendication 1, dans lequel le tapis (1, 11, 17) présente en outre : (iii) des fils de velours (2) s'étendant depuis la face supérieure du substrat (3).

3. Revêtement de sol selon la revendication 2, dans lequel la couche d'appui (4, 22) ou le plateau (6, 12, 19) ou les deux incorporent une structure pour augmenter le coefficient de frottement entre le tapis (1, 11, 17) et la base (5, 13, 18) sélectionnée à partir du groupe constitué d'une surface texturée, de surfaces complémentaires, de saillies de surface et d'une couche de matériau collant.

4. Revêtement de sol selon la revendication 2, dans lequel le second composant du système de fixation est un élément de fixation de type champignon (14, 15), et les premier et second composants du système de fixation sont capables de s'entremêler.

5. Revêtement de sol selon la revendication 4, dans lequel le premier composant et le second composant du système de fixation sont espacés dans des emplacements distincts, à l'opposé l'un de l'autre, autour des périmètres du tapis (1, 11, 17) et du plateau (6, 12, 19), respectivement.

6. Revêtement de sol selon la revendication 1, 2 ou 4, dans lequel le poids du tapis (1, 11, 17) seul n'amène pas les premier et second composants du système de fixation à venir en prise, lorsque le tapis (1, 11, 17) est posé sur le plateau (6, 12, 19) et optionnellement dans lequel le tapis (1, 11, 17) présente un poids de 847,64 à 2 203,87 g/m² (25 à 65 oz/yd²) et la couche d'appui (4, 22) comprend en outre optionnellement un élastomère.

7. Revêtement de sol selon la revendication 1, dans lequel le premier composant du système de fixation est attaché au plateau (6, 12, 19), et la couche d'appui (4, 22) est un textile non tissé, et dans lequel la couche d'appui (4, 22) est capable d'être pénétrée par les crochets du premier composant du système de fixation.

8. Revêtement de sol selon la revendication 3, dans lequel la couche d'appui (4, 22) du tapis (1, 11, 17), et/ou le plateau (6, 12, 19) présente/présentent une texture de surface granulaire.

9. Revêtement de sol selon la revendication 3, dans lequel la couche d'appui (4, 22) du tapis (1, 11, 17) présente une couche de résine thermoplastique thermofusible, de préférence un élastomère de polyoléfine, appliquée au côté faisant face à la base (5, 13, 17), pour augmenter le coefficient de frottement entre le tapis (1, 11, 17) et la base (5, 13, 17).

10. Revêtement de sol selon la revendication 3, dans lequel au moins la couche d'appui (4, 22) du tapis (1, 11, 17) ou le plateau (6, 12, 19) présente une surface texturée présentant une rugosité moyenne de 10 à 50 microns, telle que mesurée entre les points bas et haut le long de la zone texturée.

11. Procédé d'installation d'un tapis de sol comprenant les étapes suivantes :
(a) la fourniture d'un composant de base, dans lequel le composant de base contient au moins un moyen d'attache ;
(b) la fourniture d'un composant textile, dans lequel le composant textile est composé d'un tapis à velours tufté et contient au moins un moyen d'attache qui travaille dans une relation correspondante avec l'au moins un moyen d'attache de l'étape « a », et dans lequel le composant de base et le composant textile peuvent être attachés de manière libérable l'un à l'autre via l'au moins un moyen d'attache ;
(c) l'alignement du composant textile avec le composant de base, dans lequel l'étape d'alignement est réalisée via l'utilisation d'au moins un mécanisme d'alignement ou de déploiement, dans lequel l'au moins un mécanisme d'alignement et de déploiement est sélectionné à partir du groupe constitué de configurations de composants textiles qui réduisent la superficie, l'utilisation d'un matériau en film, l'utilisation d'un matériau en feuille, et des combinaisons de celles-ci ; et
(d) le déploiement du composant textile sur le composant de base.

12. Procédé selon la revendication 11, dans lequel l'au moins un moyen d'attache est réalisé via l'attache mécanique du composant textile au composant de base dans lequel l'attache mécanique est optionnellement réalisée via un système de fixation qui utilise des éléments de fixation à crochets de type champignon.
